# EUROPEAN PATENT SPECIFICATION

(11) **EP 4 418 387 B1**
(45) Date of publication and mention of the grant of the patent: **28.10.2026**
(21) Application number: 23868438.5
(22) Date of filing: 01.09.2023
(51) Int. Cl.: H01M 10/04, H01M 50/54, H01M 10/0585

(54) **ELECTRODE ASSEMBLY AND METHOD FOR MANUFACTURING THE SAME**
ELEKTRODENANORDNUNG UND VERFAHREN ZUR HERSTELLUNG DAVON
ENSEMBLE ÉLECTRODE ET SON PROCÉDÉ DE FABRICATION

(30) Priority: 22.09.2022 KR 20220119740
(43) Date of publication of application: 21.08.2024
(73) Proprietor: LG Energy Solution, Ltd., Seoul 07335 (KR)
(72) Inventor: BAEK, Doo Hyun, 34122 Daejeon (KR); KANG, In Woo, 34122 Daejeon (KR); HONG, Eui Jin, 34122 Daejeon (KR); LEE, Hyun Ju, 34122 Daejeon (KR); CHO, Seung Su, 34122 Daejeon (KR)
(74) Representative: Goddar, Heinz J.
(86) International application number: PCT/KR2023/013108
(87) International publication number: WO 2024/063383

(56) References cited:
- EP-A1- 3 220 450
- EP-A1- 3 965 215
- CN-A- 113 594 534
- KR-A- 20070 116 295
- KR-A- 20180 032 160
- KR-A- 20200 033 018
- KR-A- 20210 032 151
- KR-A- 20220 102 495
- US-A1- 2013 149 592
- US-A1- 2022 223 983
- US-A1- 2023 048 136

## Description

### [Technical Field]

This application claims the benefit of priority to Korean Patent Application No. 2022-0119740 filed on September 22, 2022.

The present invention relates to an electrode assembly and a method of manufacturing the same, and more particularly to an electrode assembly that is capable of freely adjusting voltage in a single battery cell and that is relatively simple to manufacture and a method of manufacturing the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, a pouch-shaped secondary battery may be manufactured by receiving an electrode assembly in a case and sealing the case, and the electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other.

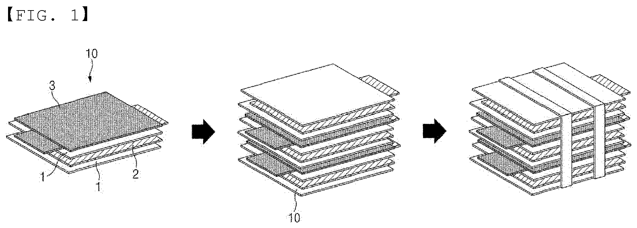

FIG. 1 is a sectional view of a conventional electrode assembly. As shown in FIG. 1, a commonly known electrode assembly is configured such that monocells 10, in each of which a separator 1, a negative electrode 2, a separator 1, and a positive electrode 3 are stacked from below in that order, are stacked and a half-cell 20, in which a negative electrode is interposed between a pair of separators, is located at the uppermost end. All of the negative electrodes are connected to each other in parallel to form a negative electrode terminal, and all of the positive electrodes are connected to each other in parallel to form a positive electrode terminal.

In the conventional electrode assembly, it is possible to increase the capacity of a single battery cell; however, it is not possible to increase voltage of the battery cell since all of the negative electrodes are connected to each other in parallel and all of the positive electrodes are connected to each other in parallel.The relevant prior art for the present invention is given by US 2022/223983 A1, EP 3 965 215 A1 and KR20210065655A.

### [Disclosure]

### [Technical Problem]

The present invention has been made in view of the above problems, and it is an object of the present invention to provide an electrode assembly capable of freely increasing or decreasing voltage in a single battery cell.

It is another object of the present invention to provide an electrode assembly manufacturing method capable of simplifying a manufacturing process when manufacturing an electrode assembly capable of freely adjusting voltage.

### [Technical Solution]

The present invention is defined according to the subject matter of the appended independent claims. Particular embodiments are given by the additional features of the appended dependent claims.

An electrode assembly according to the present invention to accomplish the above objects includes a first monocell (200), a second monocell (300) located above the first monocell (200), and a third separator (400) located between the first monocell (200) and the second monocell (300), wherein the first monocell (200) has a first separator (210), a first negative electrode (220), a first separator (210), and a first positive electrode (230) stacked from below in that order, the second monocell (300) has a second separator (310), a second negative electrode (320), a second separator (310), and a second positive electrode (330) stacked from above in that order, first positive electrode tabs (231) of the first positive electrode (230) and second negative electrode tabs (321) of the second negative electrode (320) are connected to form a composite tab bundle (C), and first negative electrode tabs (221) of the first negative electrode (220) are connected to form a first negative electrode tab bundle (A) that functions as a negative electrode terminal while second positive electrode tabs (331) of the second positive electrode (330) are connected to form a second positive electrode tab bundle (B) that functions as a positive electrode terminal.

Also, in the electrode assembly according to the present invention, the third separator (400) may be provided in a number of one or more, in direct contact with each other.

Also, in the electrode assembly according to the present invention, the first monocell (200) is equal in number to the second monocell (300).

Also, in the electrode assembly according to the present invention, the first positive electrode tabs (231) of the first positive electrode (230) may be connected to form a first positive electrode tab bundle (A'), the second negative electrode tabs (321) of the second negative electrode (320) may be connected to form a second negative electrode tab bundle (B'), and the first positive electrode tab bundle (A') and the second negative electrode tab bundle (B') may be electrically connected to each other via a tab bundle connection member (D).

In addition, the present invention provides a pouch-shaped secondary battery including the electrode assembly.

In addition, an electrode assembly manufacturing method according to the present invention includes an electrode assembly manufacturing method including a first step of preparing two or more modified first monocells having a third separator located on a first monocell comprising a first separator, a first negative electrode, a first separator, and a first positive electrode stacked from below in that order, a second step of rotating one of the modified first monocells 180 degrees to prepare a modified second monocell having a second separator, a second negative electrode, a second separator, a second positive electrode, and a third separator are stacked from above in that order, a third step of stacking the modified second monocell on the modified first monocell, and a fourth step of connecting first positive electrode tabs of the first positive electrode and second negative electrode tabs of the second negative electrode to form a composite tab bundle (C), connecting first negative electrode tabs of the first negative electrode to form a first negative electrode tab bundle (A) that functions as a negative electrode terminal, and connecting second positive electrode tabs of the second positive electrode to form a second positive electrode tab bundle (B) that functions as a positive electrode terminal.

Also, in the electrode assembly manufacturing method according to the present invention, the first separator, the second separator, and the third separator may be made of the same material.

Also, in the electrode assembly manufacturing method according to the present invention, the first step may further include preparing at least one first monocell including a first separator, a first negative electrode, a first separator, and a first positive electrode stacked from below in that order, and the second step may further include rotating the first monocell 180 degrees to prepare a second monocell having a second separator, a second negative electrode, a second separator, and a second positive electrode are stacked from above in that order.

Also, in the electrode assembly manufacturing method according to the present invention, the third step may include stacking at least one first monocell, a modified first monocell, a modified second monocell, and at least one second monocell from below in that order.

Also, in the electrode assembly manufacturing method according to the present invention, each of the first monocell and the second monocell may be provided in plural.

Also, in the electrode assembly manufacturing method according to the present invention, the fourth step may include connecting the first positive electrode tabs of the first positive electrode to form a first positive electrode tab bundle (A'), connecting the second negative electrode tabs of the second negative electrode to form a second negative electrode tab bundle (B'), and connecting the first positive electrode tab bundle (A') and the second negative electrode tab bundle (B') to each other using a tab bundle connection member (D) .

### [Advantageous Effects]

As is apparent from the above description, an electrode assembly according to the present invention has an advantage in that positive electrodes and negative electrodes are electrically connected to each other in parallel and in series, whereby it is possible to freely adjust the voltage of a single battery cell.

In addition, an electrode assembly manufacturing method according to the present invention has a merit in that a monocell or a modified monocell further including a separator and a rotated version of the monocell or the modified monocell are stacked from below in that order, whereby it is possible to prevent complexity of a manufacturing process.

Furthermore, the electrode assembly manufacturing method according to the present invention has an advantage in that a positive electrode tab bundle and a negative electrode tab bundle formed by connection are provided and a tab bundle connection member configured to electrically connect the positive electrode tab bundle and the negative electrode tab bundle to each other is further provided, whereby it is possible to minimize damage to the tabs due to swelling even though a large number of electrodes is provided in order to increase capacity.

### [Description of Drawings]

FIG. 1 is a sectional view of a conventional electrode assembly.
FIG. 2 is a view illustrating a first monocell and a second monocell according to the present invention.
FIG. 3 is a view illustrating a modified first monocell and a modified second monocell according to the present invention.
FIG. 4 is a view illustrating an electrode assembly according to a first preferred embodiment of the present invention.
FIG. 5 is a view illustrating an electrode assembly according to a second preferred embodiment of the present invention.
FIG. 6 is a view illustrating an electrode assembly according to a third preferred embodiment of the present invention.
FIG. 7 is a view illustrating an electrode assembly according to a fourth preferred embodiment of the present invention.
FIG. 8 is a flowchart illustrating a method of manufacturing an electrode assembly according to the present invention.

### [Best Mode]

The present invention is defined according to the subject matter of the appended independent claims. Particular embodiments are given by the additional features of the appended dependent claims.

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an electrode assembly according to the present invention and a method of manufacturing the same will be described with reference to the accompanying drawings.

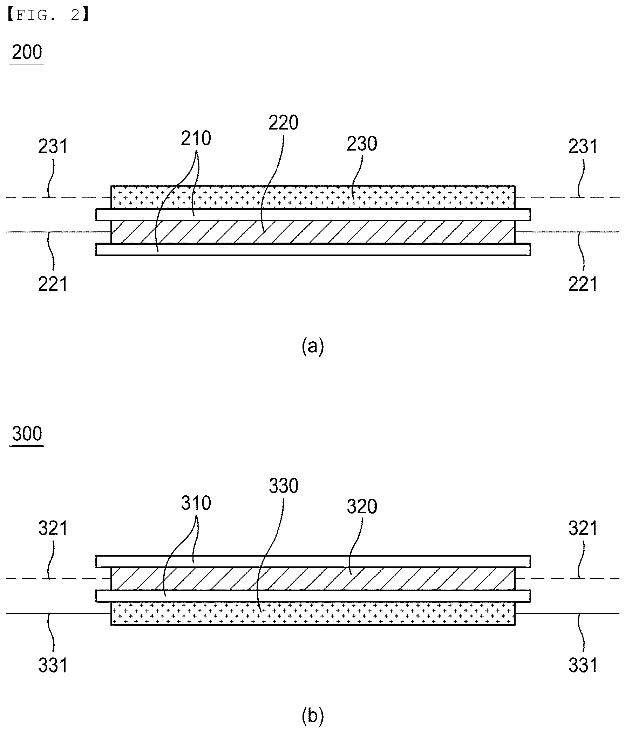

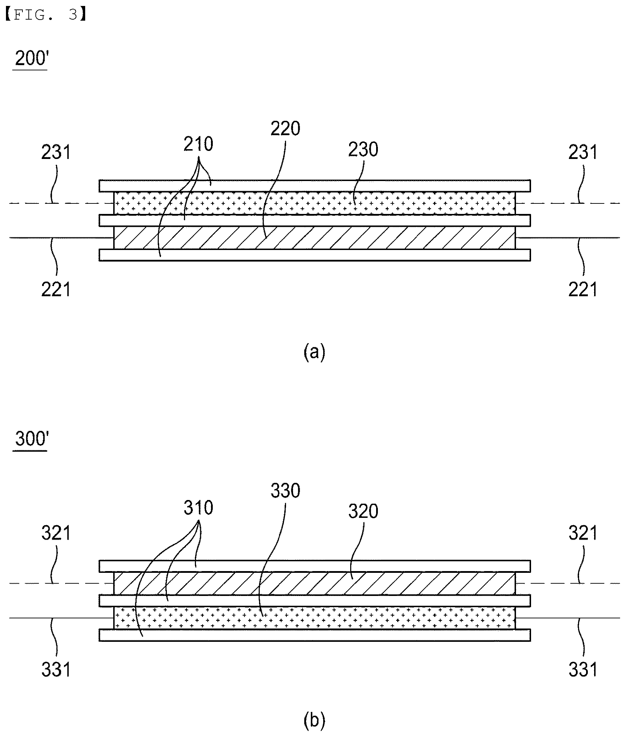

FIG. 2 is a view illustrating a first monocell and a second monocell according to the present invention, and FIG. 3 is a view illustrating a modified first monocell and a modified second monocell according to the present invention.

The first monocell, the second monocell, the modified first monocell, and the modified second monocell according to the present invention will be described with reference to the above figures.

Referring first to (a) of FIG. 2, the first monocell 200 is identical in configuration to a commonly known monocell including two separators, one negative electrode, and one positive electrode. That is, a first separator 210, a first negative electrode 220, a first separator 210, and a first positive electrode 230 are stacked from below in that order.

The second monocell 300 is a monocell in the state in which the first monocell 200 is rotated 180 degrees, and a second separator 310, a second negative electrode 320, a second separator 310, and a second positive electrode 330 are stacked from above in that order, as shown in (b) of FIG. 2.

The modified first monocell 200' further includes a first separator 210 provided above the first positive electrode 230 located at the uppermost part of the first monocell 200, whereby the modified first monocell is configured to have a structure in which a first separator 210, a first negative electrode 220, a first separator 210, a first positive electrode 230, and a first separator 210 are stacked from below in that order (see (a) of FIG. 3).

The modified second monocell 300' further includes a second separator 310 provided under the second positive electrode 330 located at the lowermost part of the second monocell 300, whereby the modified second monocell is configured to have a structure in which a second separator 310, a second negative electrode 320, a second separator 310, a second positive electrode 330, and a second separator 310 are stacked from above in that order (see (b) of FIG. 3).

Here, the first negative electrode 220 and the second negative electrode 320 have the same configuration, the first positive electrode 230 and the second positive electrode 330 have the same configuration, and the first separator 210 and the second separator 310 have the same configuration.

Each of the first negative electrode 220 and the second negative electrode 320 is manufactured by applying a slurry mixture of a negative electrode active material and a binder to a negative electrode current collector.

As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

In addition, each of the first positive electrode 230 and the second positive electrode 330 is manufactured by applying a slurry mixture of a positive electrode active material and a binder to a positive electrode current collector.

The positive electrode active material may be constituted, for example, by a layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃; however, the present invention is not limited thereto.

Meanwhile, each of the negative electrode current collector and the positive electrode current collector is constituted by a portion to which the slurry including the active material is applied and an uncoated portion to which no slurry is applied. The uncoated portion is cut to form electrode tabs, more specifically a first negative electrode tab 221, a second negative electrode tab 321, a first positive electrode tab 231, and a second positive electrode tab 331.

In addition, thin insulating films having high ionic permeability and mechanical strength are used as the first separator 210 and the second separator 310, each of which is interposed between the positive electrode and the negative electrode. The pore diameter of the separator is generally 0.01 µm to 10 µm, and the thickness of the separator is generally 5 µm to 300 µm. A sheet or nonwoven fabric made of, for example, an olefin-based polymer, which is chemically resistant and hydrophobic, such as polypropylene, fiberglass, or polyethylene, may be used as the separator; however, the present invention is not limited thereto.

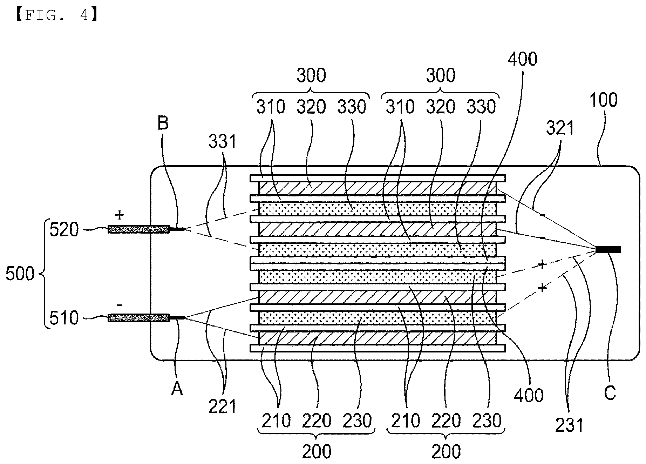

FIG. 4 is a view illustrating an electrode assembly according to a first preferred embodiment of the present invention. As shown in FIG. 4, the electrode assembly according to the first embodiment is configured to have a structure in which two second monocells 300 are located above two first monocells 200 and two third separators 400 are interposed between the first monocell 200 and the second monocell 300.

Specifically, two first monocells 200, each of which includes a first separator 210, a first negative electrode 220, a first separator 210, and a first positive electrode 230 disposed from below in that order, are sequentially stacked upward, and two second monocells 300, each of which includes a second separator 310, a second negative electrode 320, a second separator 310, and a second positive electrode 330 disposed from above in that order, are sequentially stacked downward.

At this time, it is preferable for at least one third separator 400, more preferably two third separators 400, to be interposed between the first monocell 200 and the second monocell 300. The reason for this is that it is possible to reliably prevent short circuit between the positive electrode of the first monocell 200 and the positive electrode of the second monocell 300 and furthermore stacking of a separator, a negative electrode, a separator, a positive electrode, and a separator in that order at the time of manufacturing the separator is advantageous for a process.

The first monocell 200 and the second monocell 300 having the above structure are connected to each other in series and in parallel in order to produce high voltage while maintaining the same capacity.

Specifically, two first positive electrode tabs 231 constituting the first positive electrode 230 of the first monocell 200 and two second negative electrode tabs 321 constituting the second negative electrode 320 of the second monocell 300 are connected to form a composite tab bundle C, whereby first positive electrodes 230, which are connected to each other in parallel, and second negative electrode 320, which are connected to each other in parallel, are connected to each other in series.

In addition, two first negative electrode tabs 221 of the first monocell 200 are connected to form a first negative electrode tab bundle A, which functions as a negative terminal, and two second positive electrode tabs 331 of the second monocell 300 are connected to form a second positive electrode tab bundle B, which functions as a positive terminal.

The electrode assembly having the above connection structure is connected to electrode leads 500 and is then received in a case 100 having a receiving space, and the case is sealed, whereby a pouch-shaped secondary battery is manufactured.

That is, the first negative electrode tab bundle A is electrically connected to a negative electrode lead 510, the second positive electrode tab bundle B is electrically connected to a positive electrode lead 520, and the negative electrode lead and the positive electrode lead are exposed out of the case 100.

Here, the electrode tab bundles and the electrode leads 500 may be electrically connected to each other by welding, more specifically ultrasonic welding. Coupling by ultrasonic welding may be performed according to the principle by which highfrequency vibration generated by an ultrasonic wave of about 20 kHz is applied and vibration energy is converted into thermal energy due to friction at the interface between the electrode tab bundle and the electrode lead as the result of operation of a horn and an anvil, whereby welding is rapidly performed.

Meanwhile, the case 100 may be constituted by an upper case and a lower case, and a pocket-shaped receiving space configured to receive the electrode assembly is formed in the case.

The case 100 is made of a laminate sheet including an outer resin layer, a metal layer, and an inner resin layer in order to form a receiving portion therein.

The outer resin layer is located at an outer side of the case 100, and the outer resin layer may be made of a heat-resistant polymer that exhibits excellent tensile strength, resistance to moisture permeation, and resistance to air transmission in order to secure heat resistance and chemical resistance while protecting the electrode assembly. As an example, the outer resin layer may be made of nylon or polyethylene terephthalate; however, the present invention is not limited thereto.

The metal layer, which abuts the outer resin layer, corresponds to a barrier layer configured to prevent moisture or various kinds of gas from permeating into the battery from the outside. An aluminum thin film, which is lightweight and easily shapeable, may be used as a preferred material for the metal layer.

The inner resin layer is disposed in direct contact with the electrode assembly, and therefore the inner resin layer must exhibit high insulation properties and high electrolytic resistance. In addition, the inner resin layer must exhibit high sealability in order to hermetically isolate the case from the outside, i.e., a thermally-bonded sealed portion between inner layers must exhibit excellent thermal bonding strength.

The inner resin layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

In general, a lead film is provided at the part of the sealed portion of the case 100 formed by thermal fusion that overlaps the electrode lead 500 in order to prevent electricity generated by the electrode assembly from flowing to the case 100 via the electrode lead 500 and to maintain sealing of the case 100.

It is preferable for the lead film to be made of a non-conductive material that does not conduct electricity well, and an insulating tape that is easily attached to the electrode lead 500 and has a relatively small thickness is generally used; however, the present invention is not limited thereto.

Specifically, the lead film may be made of at least one material selected from the group consisting of polyimide (PI), polypropylene (PP), polyethylene (PE), polyethylene terephthalate (PET), polyvinyl chloride (PVC), high density polyethylene (HDPE), and an epoxy resin. The lead film is bonded to the inner resin layer of the pouch case by thermal fusion using heat and pressure.

Meanwhile, the third separator 400 is identical in configuration to the first separator 210 and the second separator 310 described above, and therefore a duplicate description thereof will be omitted.

Although the positive electrode tab and the negative electrode tab are shown as protruding in opposite directions in FIG. 4, which is only an example, a unidirectional electrode assembly configured such that the positive electrode tab and the negative electrode tab are located in the same direction may be used.

In addition, as shown in FIG. 3, a modified first monocell 200' further including a first separator 210 and a modified second monocell 300' further including a second separator 310 may be used instead of the two third separators 400. In other words, the first monocell 200, the modified first monocell 200', the modified second monocell 300', and the second monocell 300 may be disposed from below.

Furthermore, two monocells may be provided, i.e., one second monocell 300 may be located above one first monocell 200, and two third separators 400 may be interposed between the first monocell 200 and the second monocell 300. In this case, the modified first monocell 200' and the modified second monocell 300' may be stacked from below.

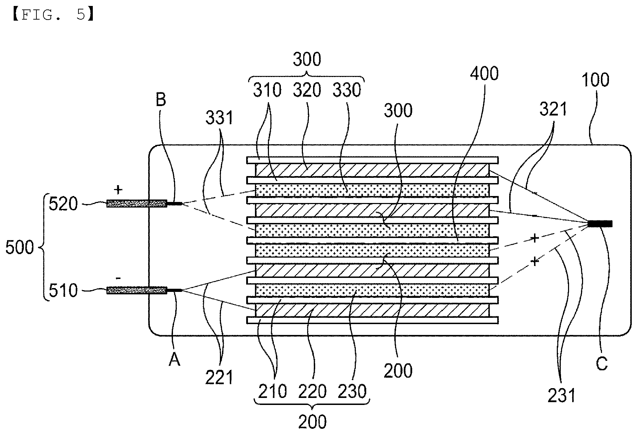

FIG. 5 is a view illustrating an electrode assembly according to a second preferred embodiment of the present invention. As shown in FIG. 5, the electrode assembly according to the second embodiment is identical to the electrode assembly according to the first embodiment except that one third separator 400 is provided.

That is, two second monocells 300 are located above two first monocells 200, and one third separator membrane 400 is interposed between the first monocell 200 and the second monocell 300.

Consequently, a first monocell 200, a modified first monocell 200', a second monocell 300, and a second monocell 300 may be stacked from below in that order, or a first monocell 200, a first monocell 200, a modified second monocell 300', and a second monocell 300 may be stacked from below in that order.

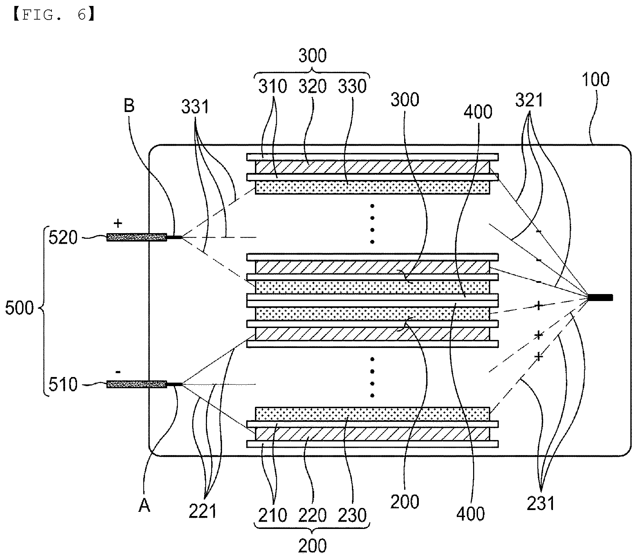

FIG. 6 is a view illustrating an electrode assembly according to a third preferred embodiment of the present invention. As shown in FIG. 6, the electrode assembly according to the third embodiment is identical to the electrode assembly according to the first embodiment except that three or more first monocells 200 and three or more second monocells 300 are provided and the number of the first monocells is equal to the number of the second monocells.

Specifically, two third separators 400 are provided above three or more first monocells 200 in tight contact, and three or more second monocells 300 are stacked above the third separators 400. Of course, it is obvious that it is possible to implement an electrode assembly having the same structure by omitting the third separators 400 and appropriately disposing a modified first monocell 200' or a modified second monocell 300'.

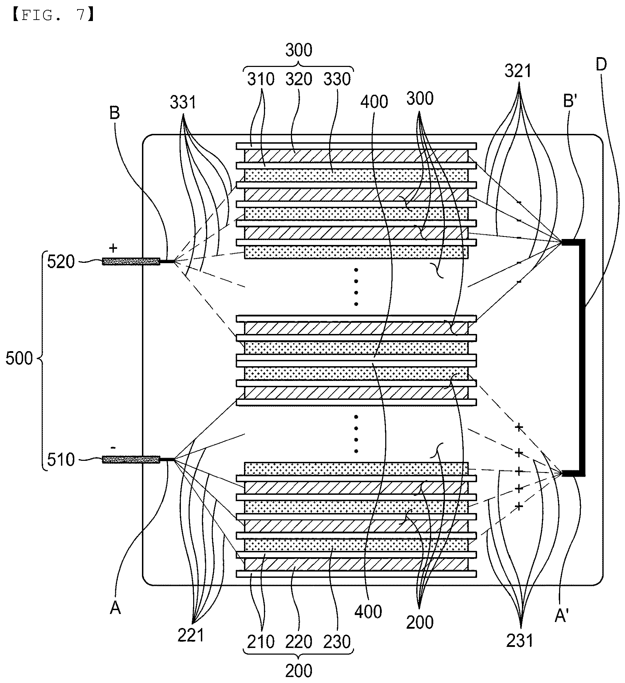

FIG. 7 is a view illustrating an electrode assembly according to a fourth preferred embodiment of the present invention. Depending on the type of device to which a secondary battery is applied, high capacity and high voltage may be required at the same time, and a large number of first monocells 200 and second monocells 300 may need to be stacked.

During use, however, swelling occurs due to gas generated in continuously repeated charging and discharging processes. At this time, a secondary battery including a large number of stacked monocells may have a problem such as cutting of an electrode tab or an electrode tab bundle.

In order to solve the above problem, the electrode assembly according to the fourth embodiment is configured such that a first positive electrode tab bundle A', a second negative electrode tab bundle B', and a tab bundle connection member D configured to electrically connect the first positive electrode tab bundle and the second negative electrode tab bundle to each other are provided instead of the composite tab bundle C of the first embodiment.

Specifically, a first positive electrode tab bundle A', in which first positive electrode tabs 231 of a first positive electrode 230 are connected to each other, and a second negative electrode tab bundle B', in which second negative electrode tabs 321 of a second negative electrode 320 are connected to each other, are provided. In addition, the first positive electrode tab bundle A' and the second negative electrode tab bundle B' are electrically connected to each other via a tab bundle connection member D.

Although one first positive electrode tab bundle A', one second negative electrode tab bundle B', and one tab bundle connection member D are shown in FIG. 7, the number of the first positive electrode tab bundles A', the second negative electrode tab bundles B', and the tab bundle connection members D may be freely changed in consideration of the number of monocells to be stacked.

In addition, although one first negative electrode tab bundle A and one second positive electrode tab bundle B are shown in FIG. 7, two or more first negative electrode tab bundles and two or more second positive electrode tab bundles may be provided. At this time, it is obvious that a separate connection member configured to connect the first negative electrode tab bundles A or the second positive electrode tab bundles B to each other may be added so as to serve as a negative electrode terminal or a positive electrode terminal.

The fourth embodiment is otherwise identical in configuration to the first embodiment, and therefore a duplicate description thereof will be omitted.

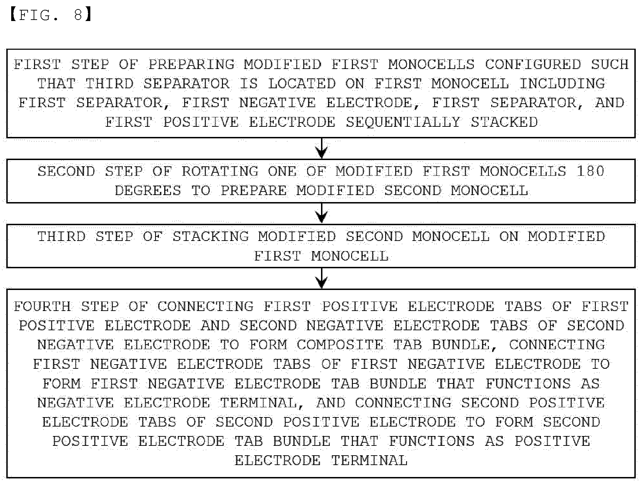

Next, a method of manufacturing an electrode assembly according to the present invention will be described. FIG. 8 is a flowchart illustrating a method of manufacturing an electrode assembly according to the present invention.

As shown in FIG. 8, the electrode assembly manufacturing method according to the present invention may include a first step of preparing a modified first monocell, a second step of preparing a modified second monocell, a third step of stacking the modified second monocell on the modified first monocell, and a fourth step of connecting tabs to each other.

The first step is a step of preparing a plurality of modified first monocells configured to have a structure in which a third separator is located on a first monocell including a first separator, a first negative electrode, a first separator, and a first positive electrode stacked from below in that order.

After being stacked as described above, predetermined heat and pressure are applied to integrate the first separator, the first negative electrode, the first separator, the first positive electrode, and the third separator.

Meanwhile, when a large-capacity secondary battery is required, it is preferable to further prepare a plurality of first monocells in the state in which no third separator is stacked.

The second step is a step of rotating some of the modified first monocells prepared in the first step 180 degrees to prepare a modified second monocell configured to have a structure in which a second separator, a second negative electrode, a second separator, a second positive electrode, and a third separator are stacked from above in that order.

In addition, when a large-capacity secondary battery is required, some of the first monocells further prepared in the first step may be rotated 180 degrees to prepare a second monocell.

The third step is a step of stacking the modified second monocell obtained in the second step on the modified first monocell obtained in the first step.

Of course, one first monocell, one modified first monocell, one modified second monocell, and one second monocell may be stacked in that order, including the case in which one modified first monocell and one modified second monocell are provided.

In addition, one first monocell, one modified first monocell, one modified second monocell, and two or more second monocells may be stacked in that order, or two or more first monocells, one modified first monocell, one modified second monocell, and two or more second monocells may be stacked in that order, and the number of the first monocells and the number of the second monocells may be equal to or different from each other.

In the fourth step, first positive electrode tabs of the first positive electrode and second negative electrode tabs of the second negative electrode are connected to form a composite tab bundle, first negative electrode tabs of the first negative electrode are connected to form a first negative electrode tab bundle that functions as a negative electrode terminal, and second positive electrode tabs of the second positive electrode are connected to form a second positive electrode tab bundle that functions as a positive electrode terminal.

In addition, when the number of the first monocells and the second monocells is large, a process of connecting the first positive electrode tabs of the first positive electrode to form a first positive electrode tab bundle, connecting the second negative electrode tabs of the second negative electrode to form a second negative electrode tab bundle, and connecting the first positive electrode tab bundle and the second negative electrode tab bundle to each other using a tab bundle connection member D may be performed.

Meanwhile, a plurality of first monocells, in which a first separator, a first negative electrode, a first separator, and a first positive electrode are stacked in that order, and a plurality of third separators may be prepared instead of the modified first monocell in the first step, the first monocell is rotated 180 degrees to prepare a second monocell in the second step, and the third separator may be interposed between the first monocell and the second monocell in the third step.

In this case, however, a process of aligning and interposing the third separator between the first monocell and the second monocell is further required, and therefore it is more preferable to prepare a modified first monocell in which a third separator is integrated in advance in the first step.

The present invention may provide a pouch-shaped secondary battery having the electrode assembly described above received therein, and may provide a battery module or a battery pack including the secondary battery described above.

**(Description of Reference Symbols)**

| | | | |
|---|---|---|---|
| 100: | Case | | |
| 200: | First monocell | | |
| 200': | Modified first monocell | | |
| 210: | First separator | | |
| 220: | First negative electrode | 221: | First negative electrode tab |
| 230: | First positive electrode | 231: | First positive electrode tab |
| 300: | Second monocell | | |
| 300': | Modified second monocell | | |
| 310: | Second separator | | |
| 320: | Second negative electrode | 321: | Second negative electrode tab |
| 330: | Second positive electrode | 331: | Second positive electrode tab |
| 400: | Third separator | | |
| 500: | Electrode lead | | |
| 510: | Negative electrode lead | | |
| 520: | Positive electrode lead | | |
| A: | First negative electrode tab bundle | A': | First positive electrode tab bundle |
| B: | Second positive electrode tab bundle | B': | Second negative electrode tab bundle |
| C: | Composite tab bundle | | |
| D: | Tab bundle connection member | | |

## Claims

1. An electrode assembly comprising:
a first monocell (200);
a second monocell (300) located above the first monocell (200); and
a third separator (400) located between the first monocell (200) and the second monocell (300), wherein
the first monocell (200) has a first separator (210), a first negative electrode (220), a first separator (210), and a first positive electrode (230) stacked from below in that order,
the second monocell (300) has a second separator (310), a second negative electrode (320), a second separator (310), and a second positive electrode (330) stacked from above in that order,
first positive electrode tabs (231) of the first positive electrode (230) and second negative electrode tabs (321) of the second negative electrode (320) are connected to form a composite tab bundle (C), and
first negative electrode tabs (221) of the first negative electrode (220) are connected to form a first negative electrode tab bundle (A) that functions as a negative electrode terminal while second positive electrode tabs (331) of the second positive electrode (330) are connected to form a second positive electrode tab bundle (B) that functions as a positive electrode terminal.

2. The electrode assembly according to claim 1, wherein the third separator (400) is provided in a number of one or more, that are in direct contact with each other.

3. The electrode assembly according to claim 1, wherein the first monocell (200) may be equal in number to the second monocell (300).

4. The electrode assembly according to claim 3, wherein
the first positive electrode tabs (231) of the first positive electrode (230) are connected to form a first positive electrode tab bundle (A'),
the second negative electrode tabs (321) of the second negative electrode (320) are connected to form a second negative electrode tab bundle (B'), and
the first positive electrode tab bundle (A') and the second negative electrode tab bundle (B') are electrically connected to each other via a tab bundle connection member (D).

5. A pouch-shaped secondary battery comprising the electrode assembly according to claim 1.

6. An electrode assembly manufacturing method comprising:
a first step of preparing two or more modified first monocells (200) having a third separator (400) located on a first monocell (200) comprising a first separator (210), a first negative electrode (220), a first separator (210), and a first positive electrode (230) stacked from below in that order;
a second step of rotating one of the modified first monocells (200) 180 degrees to prepare a modified second monocell (300) having a second separator (310), a second negative electrode (320), a second separator (310), a second positive electrode (330), and a third separator (400) are stacked from above in that order;
a third step of stacking the modified second monocell (300) on the modified first monocell (200); and
a fourth step of connecting first positive electrode tabs (231) of the first positive electrode (230) and second negative electrode tabs (321) of the second negative electrode (320) to form a composite tab bundle (C), connecting first negative electrode tabs (221) of the first negative electrode (220) to form a first negative electrode tab bundle (A) that functions as a negative electrode terminal, and connecting second positive electrode tabs (331) of the second positive electrode (330) to form a second positive electrode tab (B) bundle that functions as a positive electrode terminal.

7. The electrode assembly manufacturing method according to claim 6, wherein the first separator (210), the second separator (310), and the third separator (400) are made of the same material.

8. The electrode assembly manufacturing method according to claim 7, wherein
the first step further comprises preparing at least one first monocell (200) comprising a first separator (210), a first negative electrode (220), a first separator (210), and a first positive electrode (230) stacked from below in that order, and
the second step further comprises rotating the first monocell (200) 180 degrees to prepare a second monocell (300) having a second separator (310), a second negative electrode (320), a second separator (310), and a second positive electrode (330) stacked from above in that order.

9. The electrode assembly manufacturing method according to claim 8, wherein the third step comprises stacking at least one first monocell (200), a modified first monocell (200), a modified second monocell (300), and at least one second monocell (300) from below in that order.

10. The electrode assembly manufacturing method according to claim 9, wherein each of the first monocell (200) and the second monocell (300) is provided in plural.

11. The electrode assembly manufacturing method according to claim 10, wherein the fourth step comprises:
connecting the first positive electrode tabs (231) of the first positive electrode (230) to form a first positive electrode tab bundle (A');
connecting the second negative electrode tabs (321) of the second negative electrode (320) to form a second negative electrode tab bundle (B'); and
connecting the first positive electrode tab (A') bundle and the second negative electrode tab bundle (B') to each other using a tab bundle connection member (D).

## Patentansprüche

1. Elektrodenanordnung aufweisend:
eine erste Monozelle (200);
eine zweite Monozelle (300), die über der ersten Monozelle (200) angeordnet ist; und
einen dritten Separator (400), der zwischen der ersten Monozelle (200) und der zweiten Monozelle (300) angeordnet ist, wobei
die erste Monozelle (200) einen ersten Separator (210), eine erste negative Elektrode (220), einen ersten Separator (210) und eine erste positive Elektrode (230) aufweist, die in dieser Reihenfolge von unten auf gestapelt sind,
die zweite Monozelle (300) einen zweiten Separator (310), eine zweite negative Elektrode (320), einen zweiten Separator (310) und eine zweite positive Elektrode (330) aufweist, die in dieser Reihenfolge von oben auf gestapelt sind,
erste positive Elektroden-Tabs (231) der ersten positiven Elektrode (230) und zweite negative Elektroden-Tabs (321) der zweiten negativen Elektrode (320) so verbunden sind, dass sie ein Verbund-Tabbündel (C) bilden, und
erste negative Elektroden-Tabs (221) der ersten negativen Elektrode (220) so verbunden sind, dass sie ein erstes negatives Elektroden-Tabbündel (A) bilden, das als negativer Elektrodenanschluss dient, während zweite positive Elektroden-Tabs (331) der zweiten positiven Elektrode (330) so verbunden sind, dass sie ein zweites positives Elektroden-Tabbündel (B) bilden, das als positiver Elektrodenanschluss dient.

2. Elektrodenanordnung nach Anspruch 1, wobei der dritte Separator (400) einzeln bereitgestellt ist oder in einer Mehrzahl bereitgestellt ist, wobei die dritten Separatoren der Mehrzahl in direktem Kontakt miteinander stehen.

3. Elektrodenanordnung nach Anspruch 1, wobei die erste Monozelle (200) in gleicher Anzahl wie die zweite Monozelle (300) bereitgestellt sein kann.

4. Elektrodenanordnung nach Anspruch 3, wobei
die ersten positiven Elektroden-Tabs (231) der ersten positiven Elektrode (230) so verbunden sind, dass sie ein erstes positives Elektroden-Tabbündel (A') bilden,
die zweiten negativen Elektroden-Tabs (321) der zweiten negativen Elektrode (320) so verbunden sind, dass sie ein zweites negatives Elektroden-Tabbündel (B') bilden, und
das erste positive Elektroden-Tabbündel (A') und das zweite negative Elektroden-Tabbündel (B') über ein Tabbündel-Verbindungselement (D) elektrisch miteinander verbunden sind.

5. Beutelförmige Sekundärbatterie aufweisend die Elektrodenanordnung nach Anspruch 1.

6. Elektrodenanordnungs-Herstellungsverfahren umfassend:
einen ersten Schritt des Herstellens von zwei oder mehr modifizierten ersten Monozellen (200) mit einem dritten Separator (400), der auf einer ersten Monozelle (200) angeordnet ist, die einen ersten Separator (210), eine erste negative Elektrode (220), einen ersten Separator (210) und eine erste positive Elektrode (230) aufweist, die in dieser Reihenfolge von unten auf gestapelt sind;
einen zweiten Schritt des Drehens einer der modifizierten ersten Monozellen (200) um 180 Grad, um eine modifizierte zweite Monozelle (300) herzustellen, die einen zweiten Separator (310), eine zweite negative Elektrode (320), einen zweiten Separator (310), eine zweite positive Elektrode (330) und einen dritten Separator (400) aufweist, die in dieser Reihenfolge von oben auf gestapelt sind;
einen dritten Schritt des Stapelns der modifizierten zweiten Monozelle (300) auf der modifizierten ersten Monozelle (200); und
einen vierten Schritt des Verbindens erster positiver Elektroden-Tabs (231) der ersten positiven Elektrode (230) und zweiter negativer Elektroden-Tabs (321) der zweiten negativen Elektrode (320), um ein Verbund-Tabbündel (C) zu bilden, Verbinden erster negativer Elektroden-Tabs (221) der ersten negativen Elektrode (220), um ein erstes negatives Elektroden-Tabbündel (A) zu bilden, das als negativer Elektrodenanschluss dient, und Verbinden zweiter positiver Elektroden-Tabs (331) der zweiten positiven Elektrode (330), um ein zweites positives Elektroden-Tabbündel (B) zu bilden, das als positiver Elektrodenanschluss dient.

7. Elektrodenanordnungs-Herstellungsverfahren nach Anspruch 6, wobei der erste Separator (210), der zweite Separator (310) und der dritte Separator (400) aus dem gleichen Material hergestellt sind.

8. Elektrodenanordnungs-Herstellungsverfahren nach Anspruch 7, wobei
der erste Schritt ferner Herstellen mindestens einer ersten Monozelle (200) umfasst, die einen ersten Separator (210), eine erste negative Elektrode (220), einen ersten Separator (210) und eine erste positive Elektrode (230) aufweist, die in dieser Reihenfolge von unten auf gestapelt sind, und
der zweite Schritt ferner Drehen der ersten Monozelle (200) um 180 Grad umfasst, um eine zweite Monozelle (300) herzustellen, die einen zweiten Separator (310), eine zweite negative Elektrode (320), einen zweiten Separator (310) und eine zweite positive Elektrode (330) aufweist, die in dieser Reihenfolge von oben auf gestapelt sind.

9. Elektrodenanordnungs-Herstellungsverfahren nach Anspruch 8, wobei der dritte Schritt Stapeln mindestens einer ersten Monozelle (200), einer modifizierten ersten Monozelle (200), einer modifizierten zweiten Monozelle (300) und mindestens einer zweiten Monozelle (300) von unten in dieser Reihenfolge umfasst.

10. Elektrodenanordnungs-Herstellungsverfahren nach Anspruch 9, wobei jede der ersten Monozelle (200) und der zweiten Monozelle (300) mehrfach bereitgestellt ist.

11. Elektrodenanordnungs-Herstellungsverfahren nach Anspruch 10, wobei der vierte Schritt umfasst:
Verbinden der ersten positiven Elektroden-Tabs (231) der ersten positiven Elektrode (230), um ein erstes positives Elektroden-Tabbündel (A') zu bilden;
Verbinden der zweiten negativen Elektroden-Tabs (321) der zweiten negativen Elektrode (320), um ein zweites negatives Elektroden-Tabbündel (B') zu bilden; und
Verbinden des ersten positiven Elektroden-Tabbündels (A') und des zweiten negativen Elektroden-Tabbündels (B') miteinander unter Verwendung eines Tabbündel-Verbindungselements (D).

## Revendications

1. Ensemble d'électrodes, comprenant :
une première cellule unitaire (200) ;
une deuxième cellule unitaire (300) située au-dessus de la première cellule unitaire (200) ; et
un troisième séparateur (400) situé entre la première cellule unitaire (200) et la deuxième cellule unitaire (300),
la première cellule unitaire (200) possédant un premier séparateur (210), une première électrode négative (220), un premier séparateur (210), et une première électrode positive (230) empilés par le bas dans cet ordre,
la deuxième cellule unitaire (300) possédant un deuxième séparateur (310), une deuxième électrode négative (320), un deuxième séparateur (310), et une deuxième électrode positive (330) empilés par le haut dans cet ordre,
des languettes de première électrode positive (231) de la première électrode positive (230) et des languettes de deuxième électrode négative (321) de la deuxième électrode négative (320) étant connectées pour former un faisceau de languettes composite (C), et
des languettes de première électrode négative (221) de la première électrode négative (220) étant connectées pour constituer un premier faisceau de languettes d'électrode négative (A) fonctionnant comme une borne d'électrode négative, tandis que des languettes de deuxième électrode positive (331) de la deuxième électrode positive (330) sont connectées pour constituer un faisceau de languettes de deuxième électrode positive (B) faisant office de borne d'électrode positive.

2. Ensemble d'électrodes selon la revendication 1, le troisième séparateur (400) étant agencé au nombre de un ou plusieurs, en contact direct entre eux.

3. Ensemble d'électrodes selon la revendication 1, la première cellule unitaire (200) pouvant être égale en nombre à la deuxième cellule unitaire (300).

4. Ensemble d'électrodes selon la revendication 3,
les languettes de première électrode positive (231) de la première électrode positive (230) étant connectées pour former un faisceau de languettes de la première électrode positive (A'),
les languettes de deuxième électrode négative (321) de la deuxième électrode négative (320) étant connectées pour constituer un faisceau de languettes de la deuxième électrode négative (B'), et
le faisceau de languettes de la première électrode positive (A') et le faisceau de languettes de deuxième électrode négative (B') étant connectées électriquement l'un à l'autre par le biais d'un élément de connexion de faisceaux de languettes (D).

5. Batterie secondaire en forme de poche comprenant l'ensemble d'électrodes selon la revendication 1.

6. Procédé de fabrication d'un ensemble d'électrodes comprenant :
une première étape de préparation de deux ou plusieurs cellules unitaires modifiées (200) possédant un troisième séparateur (400) situé sur une première cellule unitaire (200) comprenant un premier séparateur (210), une première électrode négative (220), un premier séparateur (210), et une première électrode positive (230) empilés par le bas dans cet ordre ;
une deuxième étape de rotation de 180 degrés d'une des premières cellules unitaires modifiées (200) pour préparer une deuxième cellule unitaire modifiée (300) comprenant un deuxième séparateur (310), une deuxième électrode négative (320), un deuxième séparateur (310), une deuxième électrode positive (330), et un troisième séparateur (400) empilés par le haut dans cet ordre ;
une troisième étape d'empilement de la deuxième cellule unitaire modifiée (300) sur la première cellule unitaire (200) ; et
une quatrième étape de connexion de languettes de première électrode positive (231) de la première électrode positive (230) et de languettes de deuxième électrode négative (321) de la deuxième électrode positive (320) pour former un faisceau de languettes composite (C), de connexion de languettes de première électrode négative (221) de la première électrode négative (220) pour former un faisceau de languettes de première électrode négative (A) faisant office de borne d'électrode négative, et connectant des languettes de deuxième électrode positive (331) de la deuxième électrode positive (330) pour former un faisceau de languettes de deuxième électrode négative (B) faisant office de borne d'électrode positive.

7. Procédé de fabrication d'un ensemble d'électrodes selon la revendication 6, le premier séparateur (210), le deuxième séparateur (310), et le troisième séparateur (400) étant réalisés avec le même matériau.

8. Procédé de fabrication d'un ensemble d'électrodes selon la revendication 7,
la première étape comprenant en outre la préparation d'au moins une première cellule unitaire (200) comprenant un premier séparateur (210), une première électrode négative (220), un premier séparateur (210), et une première électrode positive (230) empilés par le bas dans cet ordre, et
la deuxième étape comprenant en outre la rotation de 180 degrés de la première cellule unitaire (200) pour préparer une deuxième cellule unitaire (300) comprenant un deuxième séparateur (310), une deuxième électrode négative (320), un deuxième séparateur (310), une deuxième électrode positive (330) empilés par le haut dans cet ordre.

9. Procédé de fabrication d'un ensemble d'électrodes selon la revendication 8, la troisième étape comprenant l'empilement d'au moins une première cellule unitaire (200), une première cellule unitaire modifiée (200), une deuxième cellule unitaire modifiée (300), et d'au moins une deuxième cellule unitaire (300) par le bas dans cet ordre.

10. Procédé de fabrication d'un ensemble d'électrodes selon la revendication 9, comportant l'agencement d'une pluralité de chacune de la première cellule unitaire (200) et de la deuxième cellule unitaire (300).

11. Procédé de fabrication d'un ensemble d'électrodes selon la revendication 10, la quatrième étape comprenant :
la connexion des languettes de première électrode positive (231) de la première électrode positive (230) pour former un faisceau de languettes de première électrode positive (A') ;
la connexion des languettes de deuxième électrode négative (321) de la deuxième électrode négative (320) pour former un faisceau de languettes de deuxième électrode négative (B') ; et
la connexion l'un à l'autre du faisceau de languettes de première électrode positive (A') et du faisceau de languettes de deuxième électrode négative (B') par le biais d'un élément de connexion de faisceaux de languettes (D).
